# EUROPEAN PATENT SPECIFICATION

(11) **EP 2 849 417 B1**
(45) Date of publication and mention of the grant of the patent: **30.08.2017**
(21) Application number: 13847340.0
(22) Date of filing: 05.07.2013
(51) Int. Cl.: H04M 1/725, H04M 1/60

(54) **COMMUNICATION PROCESSING METHOD AND DEVICE**
KOMMUNIKATIONSVERARBEITUNGSVERFAHREN UND -VORRICHTUNG
PROCÉDÉ ET DISPOSITIF DE TRAITEMENT DE COMMUNICATIONS

(30) Priority: 18.10.2012 CN 201210398162
(43) Date of publication of application: 18.03.2015
(73) Proprietor: Xiaomi Inc., Beijing 100085 (CN)
(72) Inventor: WANG, Wenlin, Beijing 100085 (CN); LIU, Xinyu, Beijing 100085 (CN); ZHENG, Xingping, Beijing 100085 (CN)
(74) Representative: Hanna Moore + Curley
(86) International application number: PCT/CN2013/078886
(87) International publication number: WO 2014/059803

(56) References cited:
- EP-A2- 0 712 230
- EP-A2- 0 981 237
- EP-A2- 1 521 400
- WO-A1-2011/132522
- CN-A- 101 841 599
- CN-A- 102 404 309
- CN-A- 102 932 536
- US-A1- 2007 160 054
- US-A1- 2010 332 286

## Description

### TECHNICAL FIELD

The present invention relates in general to the communication technology field, and, in particular, to communication processing methods and devices.

### BACKGROUND

With fast development of the communication technology, functions of mobile terminals are increasing, and the same function can be performed by multiple kinds of executive devices. For example, an intelligent mobile terminal can use a Bluetooth headset, a wired headset or the main body of the terminal to perform its basic communication functions.

In the case that various devices are connected to one mobile terminal, the function being used may be interrupted by misoperation of one of the devices. For example, in the case that an intelligent mobile terminal connects to a Bluetooth headset and a wired headset, when the wired headset is used to answer the phone, if a button of the Bluetooth headset is pressed by others accidentally, the current communication may be interrupted.

Therefore, in the case that a mobile terminal connects to multiple devices, the communication executive devices currently not being used may be misoperated, which may lead to an interruption of the function currently being performed, and thus an interruption of the communication.

In US patent publication US2010/0332286A1 there is described systems and methods for predicting communication outcome based on a regression model. The regression model is determined prior to or concurrently with receiving the communication from the sender.

In EP patent application EP0981237 there is described a method and system for automated silent call monitoring in an automatic call distributor (ACD) environment which includes configuring a set of call performance profiles which include voice data patterns which are descriptive of voice data transmissions during an ACD call and which are associated with substandard agent performance.

In US patent publication US2007/0160054A1 there is described a method for receiving feedback at a call center which includes receiving a call from a caller for connection with one of a plurality of agents and distributing the call to a first agent of the plurality of agents.

EP 0,712,230 A describes a cordless telephone handset terminal and a cable connected terminal. When the cordless handset is removed from its holder, the system causes an automatic activation of call redirecting or call forwarding from the fixed terminal to the cordless terminal. The fixed terminal may have a detector to sense detector signals generated when the cordless terminal is removed from its holder. These signals may be converted to activate the call diversion or forwarding. When the cordless terminal is lifted, it may send a control signal to a base station. The base station may then activate the call diversion or forwarding in dependence on the control signal. If the cordless terminal is lifted during a communication process, an automatic connection may be formed between the terminals.

### SUMMARY

An object of the embodiments of the present disclosure is to provide a communication processing method and device, in accordance with claims which follow, to solve a problem of a communication interruption caused by a misoperation of a communication executive device currently not being used.

The objects of the embodiments of the disclosure may be realized by the communication processing method according to claim 1, the mobile communication terminal device according to independent claim 5 and the computer program product according to independent claim 10. Preferred forms of the invention are set out in dependent claims 2 to 4 and 6 to 9.

According to the communication processing method and device provided by the embodiments of the disclosure, during a communication process, when an operation instruction is received, the sending device of the operation instruction is judged. The current communication is switched to another communication executive device which can continue the current communication if the sending device of the operation instruction is not the communication executive device being used by the current communication. The operation instruction will be responded only if the sending device of the operation instruction is the communication executive device being used by the current communication. Thus, a communication interruption caused by a misoperation of an idle communication executive device is avoided during the communication process.

### BRIEF DESCRIPTION OF THE DRAWINGS

FIG. 1 illustrates a flow chart of a communication processing method according to an embodiment of the disclosure.
FIG. 2 illustrates a schematic diagram of the configuration of a communication processing device according to an embodiment of the disclosure.

### DETAILED DESCRIPTION

According to communication processing method provided by the present disclosure, during a communication process, when an operation instruction not sent by the communication executive device being used by the current communication, the current communication is switched to another communication executive device rather than an immediate response to the current operation instruction is made, which may avoid a current communication interruption by accident as a result of an operation instruction sent by other communication executive device not being used.

A communication processing method provided by the first embodiment of the disclosure comprises, firstly, receiving a communication operation instruction; then determining a sending device of the received operation instruction; switching the current communication to a second communication executive device if the sending device is not the first communication executive device being used by the current communication. The second embodiment of the disclosure will explain the communication processing method in the first embodiment in detail in combination with actual applications. The embodiments of the disclosure are illustrated by taking the operation instruction being a communication termination instruction as an example, however, the disclosure is not limited thereto.

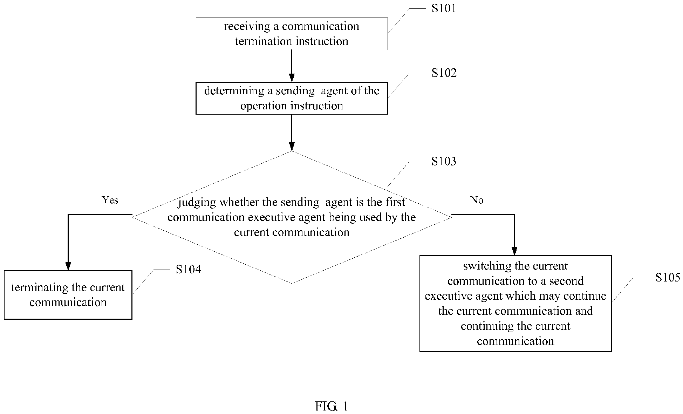

An implementation procedure of the communication processing method in the second embodiment of the disclosure, as shown in FIG. 1, specifically comprises:
Step S101: receiving a communication termination instruction.
   Specifically, a communication termination instruction received during communication procedure can be one sent by the terminal itself or other peripheral devices. For example, during a conversation, the communication termination instruction for ending the call can be one sent by the operation of the "hang up" button of the terminal (mobile phone) itself, or can be one sent by a key operation of other peripheral devices such as a wired headset or Bluetooth and so on.
Step S102: determining a sending device of the communication termination instruction.
   Specifically, when a communication termination instruction is received, the information thereof needs to be analyzed to determine the sending device of the communication termination instruction.
Step S103: judging whether the sending device of the communication termination instruction is the first communication executive device being used by the current communication or not.
   Specifically, it needs to detect the first communication executive device being used by the current communication and other communication executive devices which have an ability to perform the current communication. When the communication termination instruction is received, the sending device is judged whether or not it is the first communication executive device being used by the current communication according to the device identification information carried in the communication termination instruction. If it is, step S104 is performed; and if it is not, then step S105 is performed.
Step S104: terminating the current communication.
Step S105: switching the current communication to a second executive device which can continue the current communication from the first communication executive device and continuing the current communication.

For example, the second communication executive device which can continue the current communication after the switch can be the sending device sending the communication termination instruction, or it can also be other communication executive devices which can continue the current communication, which can make sure the continuation of the current communication and that the first communication executive device does not perform the termination operation.

According to the above communication processing method provided in the embodiments of the disclosure, during the communication procedure, when receiving a communication termination instruction, a mobile terminal may judge a sending device of the communication termination instruction, and switch the current communication to other communication executive devices which can continue the current communication in the case that the sending device of the communication termination instruction is not the communication executive device being used currently. The communication termination instruction is responded to terminate the current communication only when the current communication termination instruction is sent by the communication executive device being used by the current communication. Thus, a communication interruption in the communication procedure caused by a misoperation of the other communication executive devices is avoided.

For example, after switching the current communication to the second communication executive device to continue the current communication, the method further comprises: letting the user choose whether or not to switch the current communication back to the first communication executive device through the user interface of the mobile terminal. When the switch instruction sent by the user through the user interface of the mobile terminal is detected, according to this switch instruction, the current communication may be switched to the first communication executive device from the second communication executive device.

For example, users can preset the above operation instruction for performing a switch. When prompted whether or not to perform a device switch on the user interface of the mobile terminal, users can perform the corresponding operation directly on the user interface of the mobile terminal. It can determine whether the choice of the user is to perform the switch operation by judging whether the switch instruction sent through the user interface of the mobile terminal matches the preset operation instruction of performing the switch. If the result of the judgment is that the switch instruction sent by the user through the user interface of the mobile terminal matches the preset operation instruction of performing the switch, it is to perform the switching from the second communication executive device back to the first communication executive device.

In the embodiments of the disclosure, users select whether to switch the current communication back to the former executive device through the user interface of a mobile terminal, which can delay a communication interruption on one hand, and on the other hand can switch the communication procedure back to the former executive device in time if the user accidentally touch the keys on the other communication executive devices.

The communication processing method of the second embodiment is further explained in detail through a third embodiment of the disclosure. In this embodiment of the disclosure, it takes a conversation procedure through a mobile terminal as an example; however, the disclosure is not limited thereto. It may also be that any other audio information is accepted through the mobile terminal and its peripheral devices.

According to this embodiment of the disclosure, during the communication procedure of an ongoing conversation performed by the mobile terminal, the communication executive device receiving this phone call may be a receiver of the mobile terminal, or may also be a wired headset or a Bluetooth device or other peripheral devices. When any of the above communication executive devices is in the state of conversation, communication may be interrupted if the keys of other communication executive devices are touched accidentally.

In this embodiment of the disclosure, a communication procedure of an ongoing conversation performed through the communication processing method of the first embodiment of the disclosure is explained in combination with the case that the mobile terminal connects with various peripheral devices, but the disclosure is not limited thereto.

Specifically, the mobile terminal first judges the communication executive device used by the current conversation, and the connected peripheral devices.
A: the mobile terminal connecting to a wired headset and a Bluetooth at the same time.
A1: when it is determined that the mobile terminal is receiving the phone call through the receiver, if the "hang up" key on the mobile terminal is touched, then the phone call is hung up directly; if the key on the wired headset or the Bluetooth is touched, then the device for receiving the phone call in current conversation procedure is switched from the receiver to the wired headset or the Bluetooth.
A2: when it is determined that the mobile terminal is receiving the phone call through the wired headset, if the key on the Bluetooth device is touched, then the current conversation procedure is switched to the Bluetooth device for receiving the phone call, and only the termination instruction sent by the Bluetooth device is responded; if the key on the mobile terminal is touched, then the current conversation is switched to the receiver. Because a wired headset may replace a receiver on the mobile terminal, the wired headset may continue to receive the phone call.
A3: when it is determined that the mobile terminal is receiving the phone call through the Bluetooth device, if the key on the Bluetooth device is touched, then the phone call is directly terminated; if the key on the wired headset is touched, then the current conversation is switched to the wired headset, i.e., the device for receiving the phone call is switched from the Bluetooth device to the wired headset; if the key on the mobile terminal is touched, the wired headset continues to be used to receive the phone call, for the wired headset may be used instead of the receiver of the mobile terminal.
B: the mobile terminal only connecting to the Bluetooth device
B1: when it is determined that the mobile terminal is receiving the phone call through the Bluetooth device, if the key on the Bluetooth device is touched, then the conversation is terminated directly; if the key on the mobile terminal is touched, then the device used by current conversation is switched from the Bluetooth device to the receiver of the mobile terminal.
B2: when it is determined that the mobile terminal is receiving the phone call through the receiver of the mobile terminal, if the "hang up" key on the mobile terminal is touched, then the conversation is directly terminated; if the key on the Bluetooth device is detected to be touched to send a conversation termination instruction, then the current conversation is switched from the receiver to the Bluetooth.
   Because the mobile terminal currently only connects to the Bluetooth device, the wired headset does not take part in the current conversation.
C: the mobile terminal only connecting with the wired headset
   If the key on the wired headset is touched, then the current conversation is terminated; if the key on the mobile terminal is touched, then the conversation is switched to the receiver of the terminal.
   For example, as discussed above in the embodiment of the disclosure, because the wired headset may be used instead of the receiver of the mobile terminal, when the key on the mobile terminal is touched, it needs to switch the conversation procedure to the receiver of the terminal in order to avoid a conversation interruption, though it is possible to continue to use the wired headset for receiving the phone call.
D: the mobile terminal not connecting to any peripheral devices

In this case, the mobile terminal only responds to a conversation termination instruction sent by the terminal itself. If a conversation termination instruction is received, the current conversation is directly terminated without performing a switch.

For example, in the above procedure, if the conversation termination instruction is not sent from the reception device being used by the current conversation, the current conversation is switched to the device from which the conversation termination instruction is sent. In addition, after the reception device is switched, a prompt may be popped up on the interface screen for the user to select whether to perform the reception device switch or not. If the user select Yes, then the conversation may be switched back to the former reception device, which may delay the conversation interruption on one hand, and on the other hand the conversation may be switched back to the former reception device in time in the case of misoperation.

For example, the user may set in advance whether to use the current reception device to receive the operation instruction corresponding to the current conversation, such as pressing a key or sliding on the screen and so on. If the user sends a switch instruction, the mobile terminal judges whether the instruction matches the preset operation instruction. If they are matched, then switch the current reception device back to the former reception device to continue the current conversation.

For example, the above mentioned switch procedure may be a seamless switch, in which case a switch among different reception devices without terminating the conversation may be performed. Thus, the conversation procedure may be optimized and the user experience is improved.

According to the communication processing method provided by the embodiments of the disclosure, in the case that a conversation termination instruction is sent by the reception device not used by the current communication, a switch of the reception device is performed rather than responding to the termination instruction and ending the current conversation, which may avoid a conversation interruption caused by a misoperation when the mobile terminal connects to multiple peripheral devices. In addition, an information indicating whether to perform a switch may be popped up at an appropriate time, which allows the user to switch the current reception device, and allows switching back to the former reception device in time when a misoperation occurs.

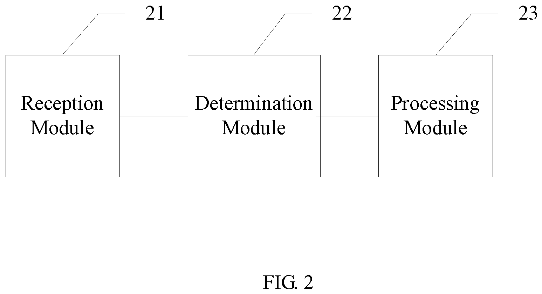

The fourth embodiment of the disclosure further provides a communication processing device for performing the above mentioned communication processing methods. Specifically, the communication processing device comprises the following parts as shown in FIG. 2:
a reception module 21 for receiving a communication operation instruction;
a determination module 22 for determining the sending device of the received operation instruction; and
a processing module 23 for switching the current communication to a second communication executive device in the case that the sending device determined by determination module 22 is not the first communication executive device being used by the current communication.

For example, the process module 23 is further used for performing an operation indicated by the operation instruction to the current communication in the case that the sending device is the first communication executive device used by the current communication.

For example, after switching the current communication to the second communication executive device, the process module 23 is still used for:
detecting the switch instruction sent by the user through the user interface of the mobile terminal and indicating to switch the current communication back to the first communication executive device;
switching the current communication from the second communication executive device back to the first communication executive device.

Specifically, after detecting the switch instruction sent by the user through the user interface of the mobile terminal, judging whether the switch instruction sent by the user through the user interface of the mobile terminal matches a preset corresponding operation instruction for performing a switch. If the result of the judgment is that the switch instruction sent by the user through the user interface of the mobile terminal matches the preset corresponding operation instruction of performing the switch, performing switching the current communication from the second communication executive device back to the first communication executive device.

For example, the second executive device is the sending device of the operation instruction.

For example, the above switching is a seamless switching.

According to communication processing devices of the embodiments of the present disclosure, in a communication procedure, when an operation instruction is received, the sending device of the operation instruction will be judged. The current communication will be switched to other communication executive devices in the case that the sending device of the operation instruction is not the communication executive device being used by the current communication. The corresponding operation instruction is responded only when the operation instruction is sent by the communication executive device being used by the current communication. Thus, a communication interruption caused by a misoperation of other communication executive devices during a communication procedure is avoided.

## Claims

1. A communication processing method at a mobile communication terminal device, wherein the mobile communication terminal device is operable when connected with one or more peripheral devices acting as a communication executive device, the method comprising the steps of:
receiving (S101) an operation instruction for terminating a current communication;
determining (S102) a sending agent of the communication termination instruction;
determining (S103) whether or not the sending agent of the communication termination instruction is a first communication executive device being used by the current communication, according to device identification information carried in the communication termination instruction; and
if it is, terminating (S104) the current communication;
otherwise if the sending agent of the communication termination instruction is not the first communication executive device being used by the current communication, switching (S105) the current communication to a second communication executive device which can continue the current communication.

2. The communication processing method according to claim 1, wherein, after switching (S105) the current communication to the second communication executive device, the method further comprises the step of:
detecting a switch instruction sent by a user through a user interface of the mobile communication terminal device and indicating to switch the current communication back to the first communication executive device; and
switching the current communication from the second communication executive device back to the first communication executive device.

3. The communication processing method according to claim 2, wherein, the method further comprises the step of: judging whether the switch instruction sent by the user through the user interface of the mobile communication terminal device matches a preset corresponding operation instruction of performing a switch; and
the switching the current communication from the second communication executive device back to the first communication executive device is that:
in the case that a result of the judging is that the switch instruction sent by the user through the user interface of the mobile communication terminal device matches the preset corresponding operation instruction of performing a switch, switching the current communication from the second communication executive device to the first communication executive device.

4. The communication processing method according to any one of claims 1 to 3, wherein, the second communication executive device is determined (S102) to be the sending agent of the communication termination instruction.

5. A mobile communication terminal device, operable to be connected with one or more peripheral devices acting as a communication executive device, for processing a current communication, comprising:
a reception module (21) configured to receive (S101) an operation instruction for terminating the current communication;
a determination module (22) configured to determine (S102) a sending agent of the communication termination instruction, and to determine (S103) whether or not the sending agent of the communication termination instruction is a first communication executive device being used by the current communication, according to device identification information carried in the communication termination instruction; and
a processing module (23) configured to terminate (S104) the current communication if the sending agent of the communication termination instruction is the first communication executive device being used by the current communication, and configured to seamlessly switch (S105) the current communication to a second communication executive device which can continue the current communication, if the sending agent of the communication termination instruction is not the first communication executive device being used by the current communication.

6. The device according to claim 5, wherein, after switching (S105) the current communication to the second communication executive device, the processing module (23) is further configured to;
detect a switch instruction sent by a user through a user interface of the mobile communication terminal device and indicating to switch the current communication back to the first communication executive device, and
switch the current communication from the second communication executive device back to the first communication executive device.

7. The device according to claim 6, wherein, the processing module (23) is further configured to judge whether the switch instruction sent by the user through the user interface of the mobile communication terminal device matches a preset corresponding operation instruction of performing a switch; and
switch the current communication from the second communication executive device back to the first communication executive device in the case that a result of the judging is that the switch instruction sent by the user through the user interface of the mobile communication terminal device matches the preset corresponding operation instruction of performing a switch.

8. The device according to any one of claims 5 to 7, wherein, the second communication executive device is the sending agent of the communication termination instruction.

9. The device according to any one of claims 5 to 8, wherein, the one or more peripheral devices acting as a communication executive device, comprise a wired headset, a Bluetooth device or other peripheral device.

10. A computer program product stored on a computer usable medium, comprising computer-readable program means for causing the computer to implement the method according to any one of claims 1 to 4.

## Patentansprüche

1. Kommunikationsverarbeitungsverfahren an einer mobilen Kommunikationsendvorrichtung, wobei die mobile Kommunikationsendvorrichtung betriebsfähig ist, wenn sie mit einer oder mehreren Peripherievorrichtungen verbunden ist, die als eine Kommunikation ausführende Vorrichtung fungieren, wobei das Verfahren folgende Schritte umfasst:
Empfangen (S101) eines Operationsbefehls zum Beenden einer aktuellen Kommunikation;
Bestimmen (S102) eines Sendemittels des Kommunikationsbeendigungsbefehls;
Bestimmen (S103), ob das Sendemittel des Kommunikationsbeendigungsbefehls eine erste Kommunikation ausführende Vorrichtung ist, die durch die aktuelle Kommunikation verwendet wird, nach den Vorrichtungsidentifikationsinformationen, die in dem Kommunikationsbeendigungsbefehl übertragen werden; und
wenn dies der Fall ist, Beenden (S104) der aktuellen Kommunikation;
ansonsten, wenn das Sendemittel des Kommunikationsbeendigungsbefehls nicht die erste Kommunikation ausführende Vorrichtung ist, die von der aktuellen Kommunikation verwendet wird, Schalten (S105) der aktuellen Kommunikation auf eine zweite Kommunikation ausführende Vorrichtung, die die aktuelle Kommunikation fortsetzen kann.

2. Kommunikationsverarbeitungsverfahren nach Anspruch 1, wobei, nach dem Schalten (S105) der aktuellen Kommunikation auf die zweite Kommunikation ausführende Vorrichtung, das Verfahren ferner folgenden Schritt umfasst:
Erfassen eines Schaltbefehls, der von einem Benutzer durch eine Benutzerschnittstelle der mobilen Kommunikationsendvorrichtung gesendet wird und Anzeigen, die aktuelle Kommunikation zurück auf die erste Kommunikation ausführende Vorrichtung zu schalten; und
Schalten der aktuellen Kommunikation von der zweiten Kommunikation ausführenden Vorrichtung zurück auf die erste Kommunikation ausführende Vorrichtung.

3. Kommunikationsverarbeitungsverfahren nach Anspruch 2, wobei das Verfahren ferner folgenden Schritt umfasst: Beurteilen, ob der Schaltbefehl, der von dem Benutzer durch die Benutzerschnittstelle der mobilen Kommunikationsendvorrichtung gesendet wird, mit einem vorgegebenen entsprechenden Operationsbefehl zum Durchführen einer Schaltung übereinstimmt; und
das Schalten der aktuellen Kommunikation von der zweiten Kommunikation ausführenden Vorrichtung zurück zu der ersten Kommunikation ausführenden Vorrichtung besteht darin, dass:
in dem Fall, dass ein Ergebnis des Beurteilens ist, dass der Schaltbefehl, der von dem Benutzer durch die Benutzerschnittstelle der mobilen Kommunikationsendvorrichtung gesendet wird, mit dem vorgegebenen entsprechenden Operationsbefehl zum Durchführen einer Schaltung übereinstimmt, die die aktuelle Kommunikation von der zweiten Kommunikation ausführenden Vorrichtung auf die erste Kommunikation ausführende Vorrichtung schaltet.

4. Kommunikationsverarbeitungsverfahren nach einem der Ansprüche 1 bis 3, wobei die zweite Kommunikation ausführende Vorrichtung dazu bestimmt (S102) ist, das Sendemittel des Kommunikationsbeendigungsbefehls zu sein.

5. Mobile Kommunikationsendvorrichtung, betriebsfähig, um mit einer oder mehreren Peripherievorrichtungen verbunden zu sein, die als eine Kommunikation ausführende Vorrichtung fungieren, zum Verarbeiten einer aktuellen Kommunikation, umfassend:
ein Empfangsmodul (21) dazu ausgelegt, einen Operationsbefehl zum Beenden der aktuellen Kommunikation zu empfangen (S101);
ein Bestimmungsmodul (22) dazu ausgelegt, ein Sendemittel des Kommunikationsbeendigungsbefehls zu bestimmen (S102), und zu bestimmen (S103) ob das Sendemittel des Kommunikationsbeendigungsbefehls eine erste Kommunikation ausführende Vorrichtung ist, die von der aktuellen Kommunikation verwendet wird, nach Vorrichtungsidentifikationsinformationen, die in dem Kommunikationsbeendigungsbefehl übertragen werden, oder nicht; und
ein Verarbeitungsmodul (23), dazu ausgelegt, die aktuelle Kommunikation zu beenden (S104), wenn das Sendemittel des Kommunikationsbeendigungsbefehls die erste Kommunikation ausführende Vorrichtung ist, die von der aktuellen Kommunikation verwendet wird, und dazu ausgelegt, übergangslos die aktuelle Kommunikation auf eine zweite Kommunikation ausführende Vorrichtung zu schalten (S105), die die aktuelle Kommunikation fortsetzen kann, wenn das Sendemittel des Kommunikationsbeendigungsbefehls nicht die erste Kommunikation ausführende Vorrichtung ist, die von der aktuellen Kommunikation verwendet wird.

6. Vorrichtung nach Anspruch 5, wobei, nach dem Schalten (S105) der aktuellen Kommunikation auf die zweite Kommunikation ausführende Vorrichtung, das Verarbeitungsmodul (23) ferner zu Folgendem ausgelegt ist:
einen Schaltbefehl zu erfassen, der von einem Benutzer durch eine Benutzerschnittstelle der mobilen Kommunikationsendvorrichtung gesendet wird, und Anzeigen, die aktuelle Kommunikation zurück auf die erste Kommunikation ausführende Vorrichtung zu schalten, und
die aktuelle Kommunikation von der zweiten Kommunikation ausführenden Vorrichtung zurück auf die erste Kommunikation ausführende Vorrichtung zu schalten.

7. Vorrichtung nach Anspruch 6, wobei das Verarbeitungsmodul (23) ferner dazu ausgelegt ist, zu beurteilen, ob der Schaltbefehl, der von dem Benutzer durch die Benutzerschnittstelle der mobilen Kommunikationsendvorrichtung gesendet wird, mit einem vorgegebenen entsprechenden Operationsbefehl zum Durchführen einer Schaltung übereinstimmt; und
die aktuelle Kommunikation in dem Fall von der zweiten Kommunikation ausführenden Vorrichtung zurück auf die erste Kommunikation ausführende Vorrichtung zu schalten, dass ein Ergebnis des Beurteilens ist, dass der Schaltbefehl, der von dem Benutzer durch die Benutzerschnittstelle der mobilen Kommunikationsendvorrichtung gesendet wird, mit dem vorgegebenen entsprechenden Operationsbefehl zum Durchführen einer Schaltung übereinstimmt.

8. Vorrichtung nach einem der Ansprüche 5 bis 7, wobei die zweite Kommunikation ausführende Vorrichtung das Sendemittel des Kommunikationsbeendigungsbefehls ist.

9. Vorrichtung nach einem der Ansprüche 5 bis 8, wobei die eine oder mehreren Peripherievorrichtungen, die als eine Kommunikation ausführende Vorrichtung agieren, ein verkabeltes Headset, eine Bluetooth-Vorrichtung oder eine andere Peripherievorrichtung umfassen.

10. Computerprogrammprodukt, das auf einem computerverwendbaren Medium gespeichert ist, umfassend computerlesbare Programmmittel, um dafür zu sorgen, dass der Computer das Verfahren nach einem der Ansprüche 1 bis 4 umsetzt.

## Revendications

1. Procédé de traitement de communications au niveau d'un terminal de communication mobile, dans lequel le terminal de communication mobile est utilisable si connecté à un ou plusieurs appareils périphériques agissant comme un appareil exécutif de communication, le procédé comprenant les étapes consistant à :
recevoir (S101) une instruction d'utilisation pour mettre fin à une communication en cours ;
déterminer (S102) un agent d'envoi de l'instruction de fin de communication ;
déterminer (S103) si l'agent d'envoi de l'instruction de fin de communication est ou non un premier appareil exécutif de communication utilisé par la communication en cours, selon des informations d'identification d'appareil transmises dans l'instruction de fin de communication ; et
si c'est le cas, mettre fin (S104) à la communication en cours ;
sinon si l'agent d'envoi de l'instruction de fin de communication n'est pas le premier appareil exécutif de communication utilisé par la communication en cours, basculer (S105) la communication en cours vers un second appareil exécutif de communication qui peut continuer la communication en cours.

2. Procédé de traitement de communications selon la revendication 1, dans lequel, après le basculement (S105) de la communication en cours vers le second appareil exécutif de communication, le procédé comprend en outre l'étape consistant à :
détecter une instruction de basculement envoyée par un utilisateur via une interface utilisateur du terminal de communication mobile et indiquant de rebasculer la communication en cours vers le premier appareil exécutif de communication ; et
rebasculer la communication en cours du second appareil exécutif de communication vers le premier appareil exécutif de communication.

3. Procédé de traitement de communications selon la revendication 2, dans lequel, le procédé comprend en outre l'étape consistant à : juger si l'instruction de basculement envoyée par l'utilisateur via l'interface utilisateur du terminal de communication mobile correspond à une instruction d'utilisation correspondante prédéfinie d'exécution d'un basculement ; et
le rebasculement de la communication en cours du second appareil exécutif de communication vers le premier appareil exécutif de communication est que :
dans le cas où un résultat du jugement est tel que l'instruction de basculement envoyée par l'utilisateur via l'interface utilisateur du terminal de communication mobile correspond à l'instruction d'utilisation correspondante prédéfinie d'exécution d'un basculement, basculer la communication en cours du second appareil exécutif de communication vers le premier appareil exécutif de communication.

4. Procédé de traitement de communications selon l'une quelconque des revendications 1 à 3, dans lequel, le second appareil exécutif de communication est déterminé (S102) comme étant l'agent d'envoi de l'instruction de fin de communication.

5. Terminal de communication mobile, utilisable pour être connecté à un ou plusieurs appareils périphériques agissant comme un appareil exécutif de communication, pour traiter une communication en cours, comprenant :
un module de réception (21) configuré pour recevoir (S101) une instruction d'utilisation pour mettre fin à la communication en cours ;
un module de détermination (22) configuré pour déterminer (S102) un agent d'envoi de l'instruction de fin de communication, et pour déterminer (S103) si l'agent d'envoi de l'instruction de fin de communication est ou non un premier appareil exécutif de communication utilisé par la communication en cours, selon des informations d'identification d'appareil transmises dans l'instruction de fin de communication ; et
un module de traitement (23) configuré pour mettre fin (S104) à la communication en cours si l'agent d'envoi de l'instruction de fin de communication est le premier appareil exécutif de communication utilisé par la communication en cours, et configuré pour basculer (S105) de manière transparente la communication en cours vers un second appareil exécutif de communication qui peut continuer la communication en cours, si l'agent d'envoi de l'instruction de fin de communication n'est pas le premier appareil exécutif de communication utilisé par la communication en cours.

6. Appareil selon la revendication 5, dans lequel, après le basculement (S105) de la communication en cours vers le second appareil exécutif de communication, le module de traitement (23) est en outre configuré pour :
détecter une instruction de basculement envoyée par un utilisateur via une interface utilisateur du terminal de communication mobile et indiquant de rebasculer la communication en cours vers le premier appareil exécutif de communication, et
rebasculer la communication en cours du second appareil exécutif de communication vers le premier appareil exécutif de communication.

7. Appareil selon la revendication 6, dans lequel, le module de traitement (23) est en outre configuré pour juger si l'instruction de basculement envoyée par l'utilisateur via l'interface utilisateur du terminal de communication mobile correspond à une instruction d'utilisation correspondante prédéfinie d'exécution d'un basculement ; et
rebasculer la communication en cours du second appareil exécutif de communication vers le premier appareil exécutif de communication dans le cas où un résultat du jugement est tel que l'instruction de basculement envoyée par l'utilisateur via l'interface utilisateur du terminal de communication mobile correspond à l'instruction d'utilisation correspondante prédéfinie d'exécution d'un basculement.

8. Appareil selon l'une quelconque des revendications 5 à 7, dans lequel, le second appareil exécutif de communication est l'agent d'envoi de l'instruction de fin de communication.

9. Appareil selon l'une quelconque des revendications 5 à 8, dans lequel, le ou les plusieurs appareils périphériques agissant comme un appareil exécutif de communication, comprennent un casque filaire, un appareil Bluetooth ou autre appareil périphérique.

10. Produit de programme informatique stocké sur un support utilisable sur ordinateur, comprenant un moyen de programme lisible sur ordinateur pour amener l'ordinateur à implémenter le procédé selon l'une quelconque des revendications 1 à 4.
